# EUROPÄISCHE PATENTSCHRIFT

(11) **EP 3 510 683 B1**
(45) Veröffentlichungstag und Bekanntmachung des Hinweises auf die Patenterteilung: **19.02.2020**
(21) Anmeldenummer: 17734011.4
(22) Anmeldetag: 19.06.2017
(51) Int. Cl.: H02J 3/12, H02J 3/18

(54) **VERFAHREN UND SYSTEM ZUR DEZENTRALEN WEITBEREICHSREGELUNG**
METHOD AND SYSTEM FOR DECENTRALIZED WIDE-AREA CONTROL
PROCÉDÉ ET SYSTÈME DE RÉGULATION DÉCENTRALISÉE LONGUE PORTÉE

(30) Priorität: 06.09.2016 DE 102016116589
(43) Veröffentlichungstag der Anmeldung: 17.07.2019
(73) Patentinhaber: Innogy SE, 45128 Essen (DE)
(72) Erfinder: SCHLENKER, Nele, 44809 Bochum (DE); DODENHOFF, Peter, 46514 Schermbeck (DE); DROPALLA, Roland, 44357 Dortmund (DE)
(74) Vertreter: Cohausz & Florack
(86) Internationale Anmeldenummer: PCT/EP2017/064917
(87) Internationale Veröffentlichungsnummer: WO 2018/046152

(56) Entgegenhaltungen:
- WO-A1-2015/128119
- DE-A1-102013 109 611
- US-A1- 2016 233 681

## Beschreibung

Der Gegenstand betrifft ein Verfahren sowie ein System zur Weitbereichsregelung innerhalb eines elektrischen Verteilnetzes.

Durch den immer größer werdenden Anteil an sogenannten erneuerbaren Energien innerhalb der Verteilnetze sowie einer stark steigenden Anzahl an dezentralen Erzeugungsanlagen kommt es zu neuen Herausforderungen für das Verteilnetz. Durch die vermehrte dezentrale Einspeisung ist die Einhaltung der zulässigen Spannungsbandgrenzen innerhalb eines Verteilnetzes eine große Herausforderung. Bisher wird zur Einhaltung der Spannungsbandgrenzen eine sogenannte Weitbereichsregelung eingesetzt, welche anhand von Informationen aus dem Verteilnetz die optimale Spannung am Hochspannungs-Mittelspannungs-Transformator zentral ermittelt. Hierzu wird einer zentralen Leitstelle in nahezu Echtzeit eine Information zu einem Spannungsniveau innerhalb des Verteilnetzes mitgeteilt. Zentral wird dann errechnet, wie ein Hochspannungs-Mittelspannungs-Transformator gestuft werden muss, um das Spannungsband möglichst einzuhalten. Bekannt ist bereits, an den Hochspannungs-Mittelspannungs-Transformatoren dezentrale Spannungsregler einzusetzen, welche selbständig auf den vorgegebenen Sollwert regeln.

Die US 2016/0233681 A1 offenbart eine Spannungseinstelleinheit, die einen Spannungscontroller steuert und der eine Spannung eines Busses ändert, mit dem eine Vielzahl von Stromverteilungsleitungen verbunden sind.

Die WO 2015/128119 A1 betrifft ein Verfahren zum Vermeiden von Spannungsbandverletzungen eines Energieverteilungsnetzwerks.

Die DE 10 2013 109 611 A1 offenbart eine Vorrichtung und ein Verfahren zur Steuerung der Stabilität eines Ortsnetzes, welches eine Vielzahl von Abgängen aufweist, wobei jeder Abgang mindestens einen Verbraucher und/oder mindestens eine dezentrale Energieerzeugungsanlage umfasst.

Problematisch bei der bisherigen Lösung sind jedoch die zentrale Erfassung der Spannungswerte sowie die zentrale Berechnung der optimalen Sollwerte für die Spannungsregler an den jeweiligen Transformatoren.

Somit lag dem Gegenstand die Aufgabe zugrunde, eine dezentrale Spannungsregelung zu etablieren. Dabei soll die Berechnung des Sollwertes für den Spannungsregler des Transformators aus dem zentralen Leitsystem herausgelöst werden und direkt in der Umspannanlage angesiedelt werden.

Diese Aufgabe wird erfindungsgemäß durch ein Verfahren nach Anspruch 1 sowie ein System nach Anspruch 14 gelöst.

Wie bereits erläutert, erfordert die dezentrale Erzeugung elektrischer Energie, insbesondere mit Hilfe von sogenannten erneuerbaren Energien, ein intelligentes Netz, um die Versorgungssicherheit sowie die Einhaltung der Spannungsbandgrenzen zu gewährleisten. Insbesondere die Einhaltung der Spannungsbandgrenzen ist von enormer Bedeutung für die Versorgungssicherheit. Durch hohe Einspeiseleistung kann es jedoch entlang von Mittelspannungsstrecken insbesondere zu einer Verletzung des Spannungsbandes nach oben kommen. Auf der anderen Seite kann durch einen sehr schnellen Einbruch der Einspeiseleistung, beispielsweise bei Windstille und plötzlich bedecktem Himmel, bei gleichbleibender Last eine Verletzung eines Spannungsbandes nach unten auftreten. Beide Spannungsbandverletzungen müssen durch Spannungsstellungen am Hochspannungs-Mittelspannungs-Transformator innerhalb einer Umspannanlage ausgeglichen werden. Dies ist das Konzept der Weitbereichsregelung, bei der abhängig von Informationen aus dem Verteilnetz ein Spannungssteller des Transformators eingestellt wird.

Hierzu werden von Messpunkten entlang von Mittelspannungsstrecken, welche mit dem Transformator verbunden sind, Spannungsmesswerte erhoben und mittels Datenkommunikation zur Verfügung gestellt. Die Anordnung der Messpunkte im Netzgebiet einer Umspannanlage erfolgt vorzugsweise abhängig von historischen Spannungsmesswerten, insbesondere an solchen Punkten, an denen historisch oder auch aufgrund der Topologie am ehesten mit Verletzungen der Spannungsbänder zu rechnen ist.

Durch die Rückführung der Spannungsmesswerte aus dem Verteilnetz ergibt sich ein geschlossener Regelkreis, mit dessen Hilfe dynamisch Transformatorstufungen durchgeführt werden können, so dass Spannungsbandverletzungen vermieden werden können.

Ein Regelkreis ergibt sich unmittelbar am Transformator. Dem Spanungsregler am Transformator wird ein Sollwert seiner Ausgangsspannung zugeführt. Abhängig von der aktuellen Stufung und einer Grenze zur nächsten Stufe, wird dann eine Stufung in dem Transformator durchgeführt oder nicht. Die Ausgangsspannung am Transformator ist dann darüber hinaus beeinflusst über Transformatorverluste als auch über Schwankungen des übergelagerten Netzes, so dass die Ausgangsistspannung in diesen Regelkreis zurückgeführt wird, um gegebenenfalls die Ausgangssollspannung anzupassen.

Diesem Regelkreis überlagert ist ein Regelkreis zur Einstellung der Sollspannung an den jeweiligen Messpunkten, insbesondere an den Ortsnetzstationen. Es hat sich gezeigt, dass vorzugsweise Messpunkte unmittelbar an Ortsnetzstationen, in welchen die Mittelspannungs-/Niederspannungstransformatoren betrieben werden, angeordnet sind. Die Spannung an den Messpunkten, insbesondere an den Ortsnetzstationen ist möglichst innerhalb des Spannungsbandes zu halten. Hieraus ergibt sich eine Führungsgröße für die Sollspannung an den Messgrößen. Diese Führungsgröße wird beeinflusst durch die tatsächliche Messung der Spannungsmesswerte an den Messpunkten sowie der aktuellen Regelabweichung des Spannungsreglers am Transformator.

Ausgehend hiervon wird in dem übergeordneten Regelkreis die Führungsgröße für die Ausgangssollspannung des Hochspannungs-Mittelspannungs-Transformators berechnet. Nachfolgend werden die für die beiden Regelkreise benötigten Berechnungen und Auswertungen näher erläutert.

In einem ersten Schritt ist es für den übergeordneten Regelkreis notwendig, die Spannungsmesswerte aus den Mittelspannungsstrecken zu empfangen. Ein Hochspannungs-Mittelspannungs-Transformator ist in der Regel über zumindest eine Sammelschiene mit verschiedenen Abgangsfeldern gekoppelt. Die Abgangsfelder versorgen jeweils eine Mittelspannungsstrecke mit elektrischer Energie. Spannungsmesswerte werden aus Mittelspannungsstrecken von zumindest zwei verschiedenen Abgangsfeldern einer Umspannanlage erfasst.

Es hat sich gezeigt, dass die Erfassung der Spannungsmesswerte in räumlicher Nähe zu einer Ortsnetzstation, insbesondere eines Mittelspannungs-Niederspannungs-Transformators sinnvoll ist. Hierbei hat es sich auch gezeigt, dass es durchaus möglich ist, an diesen Transformatoren niederspannungsseitig zu messen und durch Umrechnung den Spannungsmesswert mittelspannungsseitig zu bestimmen. Die Spannungsmesswerte sind bevorzugt mittelspannungsseitige Spannungsmesswerte.

Es hat sich jedoch gezeigt, dass die Bestimmung der Ausgangssollspannung abhängig von Spannungsmesswerten aus den Mittelspannungstrecken nur dann korrekt ist, wenn die Spannungsmesswerte auch von tatsächlich an den jeweiligen Transformator bzw. die jeweilige Umspannanlage angeschlossenen Mittelspannungsstrecken stammen. Durch Umschaltungen im Netz kann es jedoch dazu kommen, dass Spannungsmesswerte zu einem ersten Zeitpunkt einer ersten Umspannanlage bzw. einem ersten Transformator zugeordnet sind, zu einem zweiten Zeitpunkt diese Zuordnung jedoch nicht mehr gilt und der Spannungsmesswert einem von dem ersten Transformator verschiedenen Transformator zugeordnet sind. Umschaltungen im Netz führen zu einer Veränderung der Netztopologie, die herkömmlicherweise nur in der zentralen Leittechnik bekannt ist. Gegenständlich wird jedoch erstmals erreicht, die Bestimmung der Ausgangssollspannung nicht zentral in dem Leitsystem zu berechnen, sondern dezentral in einer jeweiligen Umspannanlage.

Somit ist es zunächst notwendig, die empfangenen Spannungsmesswerte der verschiedenen Messpunkte innerhalb der Umspannanlage bzw. einem dort angeordneten Rechner auszuwerten.

Erst nach Auswertung der Spannungsmesswerte innerhalb der Umspannanlage kann in der Umspannanlage bestimmt werden, wie die Ausgangssollspannung für einen mit den Abgangsfeldern verbundenen Transformator ist. D.h, dass die gegenständliche Erkennung der Topologie abhängig von den Spannungsmesswerten bzw. deren Auswertung erfolgt. Durch aktuelle Auswertung der Spannungsmesswerte, ist es möglich, festzustellen, welche Messpunkte an der jeweiligen Umspannanlage angeschlossen sind. Hieraus kann die Topologie des Netzes dezentral in der Umspannanlage bestimmt werden.

Um eine dezentrale Kenntnis von der Topologie zu erlangen, werden die Messwerte von den Messpunkten der Umspannanlage bzw. den darin angeordneten Rechner zur Verfügung gestellt. Wenn nachfolgend von Umspannanlagen die Rede ist, so ist stets auch der an der Umspannanlage angeordnete Rechner gemeint.

Die Übertragung der Spannungsmesswerte aus den Mittelspannungsstrecken an die Umspannanlage kann auf zwei verschiedene Weisen erfolgen. Zum einen ist es möglich, dass die Spannungsmesswerte durch einen zentralen Datensammler geroutet werden. Hierzu bestehen Kommunikationsverbindungen zwischen den einzelnen Messpunkten und einem zentralen Datensammler, beispielsweise Weitverkehrsnetzverbindungen, insbesondere über Mobilfunk. Die einzelnen Messpunkte leiten die Informationen zunächst an den Datensammler weiter und dieser verteilt die empfangenen Messwerte an die angeschlossenen Umspannanlagen, beispielsweise ebenfalls über ein Weitverkehrsnetz, beispielsweise über das Internet. Auf der anderen Seite kann auch eine Übertragung der Messwerte unmittelbar zwischen den Messpunkten und den Umspannanlagen erfolgen. Hierbei werden Kommunikationsverbindungen zwischen den Messpunkten und den Umspannanlagen über ein Weitverkehrsnetz aufgebaut. Die Kommunikationsverbindungen sind vorzugsweise geschützte Kommunikationsverbindungen, insbesondere in Form von VPN-Tunneln.

Um in der Umspannanlage Kenntnis von die Topologie des Verteilnetzes zu gewinnen, wird gemäß der Erfindung vorgeschlagen, dass die Ausgangsspannung des Transformators verändert wird und dass anschließend eine Abhängigkeit der empfangenen Spannungsmesswerte von dieser Veränderung überwacht wird, so dass für die nachfolgende Auswertung solche Spannungswerte freigegeben werden, die eine Abhängigkeit von der Veränderung der Ausgangsspannung haben. Es ist erkannt worden, dass Veränderungen an der Ausgangsspannung des Transformators zu Veränderungen der Spannungsmesswerte in mit dem Transformator verbundenen Messpunkten führen muss. Nur solche Messpunkte, die an Mittelspannungsstrecken angeordnet sind, die mit dem Transformator verbunden sind, zeigen eine Korrelation ihrer Spannungsmesswerte zu der Veränderung der Ausgangsspannung des Transformators. Durch diese Auswertung wird die aktuelle Topologie des Verteilnetzes dezentral in der Umspannanlage ermittelt.

Insbesondere kann es sinnvoll sein, die Ausgangsspannung des Transformators um genau eine Stufe eines Stufenstellers zu verändern. An den Spannungsmesswerten kann diese Veränderung, insbesondere anhand einer Veränderung des Absolutwertes oder einer Veränderung des Differentials des Spannungsverlaufs bewertet werden. Verändert sich der Absolutwert um einen bestimmten Betrag, z.B. größer 50V, insbesondere größer 90V oder ist das Differential größer als ein bestimmter Grenzwert und liegt eine zeitliche Korrelation zwischen der Änderung des Spannungsmesswertes und der Änderung der Ausgangsspannung vor, so kann der entsprechende Spannungsmesswert für die nachfolgende Auswertung freigegeben werden. Auch ist es möglich, die Signale der Ausgangsspannung des Transformators und des Spannungsmesswertes in ihrem zeitlichen Verlauf zu korrelieren, insbesondere eine Kreuzkorrelation zu bilden. Wenn die Korrelation einen Grenzwert überschreitet, kann auf eine Abhängigkeit des Spannungsmesswertes von der Ausgangsspannung des Transformators geschlossen werden und der Spannungsmesswert für die nachfolgende Auswertung freigegeben werden. Es ist erkannt worden, dass der Spannungsmesswert abhängig von einer Stufung des Transformators über eine Hysterese hinaus verändert wird. Zeigt ein Spannungsmesswert nicht die erwartete Reaktion, wird dieser für die nachfolgende Auswertung ausgeschlossen.

Die Auswertung der Spannungsmesswerte abhängig von einer Änderung der Ausgangsspannung des Transformators kann in Abständen, vorzugsweise in regelmäßigen Abständen, insbesondere zyklisch erfolgen. Somit ist es möglich, die Ausgangssollspannung abhängig von den Spannungsmesswerten in Abständen, vorzugsweise zyklisch zu bestimmen. Auch kann die Auswertung durch ankommenden Messwerte angestoßen werden. Messwerte können sowohl zyklisch als auch bei einem Überschreiten/Unterschreiten eines Schwellwerts übertragen werden und so die Auswertung auslösen.

Es ist auch erkannt worden, dass nicht alle Messpunkte dauerhaft fehlerfrei arbeiten. Daher wird gemäß einem Ausführungsbeispiel vorgeschlagen, dass eine Veränderung der empfangenen Spannungsmesswerten über ein Zeitintervall überwacht wird und dass für die nachfolgende Auswertung solche Spannungsmesswerte freigegeben werden, deren Schwankungsbreite in dem Zeitintervall oder über eine Anzahl an Zyklen über einem Grenzwert liegt. Insbesondere ist erkannt worden, dass eine unveränderte Spannung über einen längeren Zeitraum bzw. eine Anzahl an Zyklen unrealistisch ist. Daher ist es notwendig, dass ein für die Auswertung verwendeter Spannungsmesswert im zeitlichen Verlauf eine Mindest-Schwankungsbreite aufweist. Ist dies der Fall, dann kann davon ausgegangen werden, dass dieser Messwert realistisch ist.

Eine weitere Plausibilitätsprüfung kann dahingehend sein, dass ein Spannungsmesswert an einem Messpunkt in einem definierten, plausiblen Bereich liegt. Ein solcher plausibler Bereich kann beispielsweise ein oberer und ein unterer Grenzwert sein. Somit kann überprüft werden, ob Spannungsmesswerte kleiner als ein oberer Grenzwert und/oder größer als ein unterer Grenzwert sind und nur solche Spannungsmesswerte, die innerhalb dieser vorgegebenen Grenzwerte liegen, für die nachfolgende Auswertung freigegeben werden. Ein oberer Spannungsgrenzwert kann beispielsweise zwischen 10.000 und 15000V, insbesondere bei 12.000V liegen und ein unterer Spannungsgrenzwert kann zwischen 6.000V und 9.000V, insbesondere bei 8.000V liegen.

Es ist erkannt worden, dass eine Berechnung eines Spannungssollwertes nur dann sinnvoll ist, wenn eine bestimmte Anzahl von Zyklen durchlaufen wurde, innerhalb derer die zuvor beschriebene Prüfung der Spannungsmesswerte durchgeführt wurde. Insbesondere können mehr als zwei, drei oder fünf Zyklen notwendig sein, um die ersten freigegebenen Spannungsmesswerte zu erhalten, anhand derer die Ausgangssollspannung bestimmt werden kann. Vorzugsweise werden jeweils die jüngsten vorausgehenden Zyklen in der Art eines gleitenden Beobachtungsfensters ausgewertet.

Wie erläutert, sollte die Bestimmung der Ausgangssollspannung nur auf plausiblen erfassten Spanungsmesswerten basieren. Auch ist erkannt worden, dass nur wenn eine Mindestanzahl an plausiblen erfassten Spannungsmesswerten vorhanden ist, diese auch für die Bestimmung der Ausgangssollspannung verwendet werden. Daher wird überprüft, ob eine Mindestanzahl an freigegebenen Spannungsmesswerten vorhanden ist. Insbesondere wird vorgeschlagen, dass die Auswertung mit mindestens zwei, insbesondere drei zuvor für die Auswertung freigegebenen Spannungsmesswerten durchgeführt wird. Ist die Anzahl der bisher durchgelaufenen Zyklen zu gering oder die Anzahl der freigegebenen Spannungsmesswerte zu klein, dann kann ein Ausgangsspannungssollwert auf einen vorher definierten Wert bestimmt werden.

Auch ist es möglich, dass nach jedem Zyklus überprüft wird, ob eine untere Anzahl an freigegebenen Spannungsmesswerten vorhanden ist. Mit jedem Zyklus, in dem die Anzahl der freigegebenen Spannungsmesswerte unter einem Grenzwert, beispielsweise zwei oder drei liegt, wird ein Fehlerzähler hochgezählt. Solange der Fehlerzähler innerhalb einer Fehlergrenze, beispielsweise 3 oder 5 ist, kann ein Wert einer Veränderung der Ausgangssollspannung auf 0 gesetzt werden und ein Warnsignal ausgegeben werden.

Ist der Fehlerzähler jedoch an einem Grenzwert angekommen, beispielsweise 3, kann die Ausgangssollspannung auf einen zuvor definierten Wert gesetzt werden und Störsignal ausgegeben werden.

Nachdem beispielsweise zumindest drei gültige Messwerte erfasst wurden, erfolgt die eigentliche Bestimmung der Ausgangsollspannung. Es ist erkannt worden, dass Veränderungen der Spannungsmesswerte bzw. Abweichungen der Spannungsmesswerte von einer Grenze des Spannungsbandes für unterschiedliche Mittelspannungsstrecken unterschiedliche Auswirkungen haben
Auch wird vorgeschlagen,dass die Spannungsmesswerte zunächst abhängig von Gewichtungskriterien gewichtet werden und erst anschließend der Spannungsmittelwert aus den gewichteten Spannungsmesswerten bestimmt. Gewichtungskriterien können Informationen aus historischen Spannungsbandverletzungen sein, insbesondere kann ein hoher Wichtungsfaktor bei solchen Spannungsmesswerten zum Einsatz kommen, die an Mittelspannungsstrecken erfasst wurde, die häufig Spannungsbandverletzungen hatten und ein niedriger Wichtungsfaktor kann zum Einsatz kommen, bei solchen Spannungswerten, die bei Mittelspannungsstrecken erfasst werden, bei denen selten Spannungsbandverletzungen aufgetreten sind.

Auch kann ein Wichtungskriterium die Spitzeneinspeiseleistung von dezentralen Einspeisern entlang einer Mittelspannungsstrecke sein. Je höher die Einspeiseleistung ist, desto kritischer ist eine solche Mittelspannungsstrecke hinsichtlich stark schwankender Lastflüsse, so dass dort eher mit einer Spannungsbandverletzung zu rechnen ist, als in solchen Mittelspannungsstrecken, bei denen eine geringe Einspeiseleistung angeschlossen ist. Beispielsweise kann der Wichtungsfaktor proportional zu der Einspeiseleistung entlang einer jeweiligen Mittelspannungsstrecke sein, an der der jeweilige Spannungsmesswert erfasst wurde. Insbesondere wird ein arithmetischer Spannungsmittelwert aus den mit den jeweiligen Wichtungsfaktoren gewichteten Spannungsmesswerten berechnet.

Bei der Bestimmung der Ausgangssollspannung ist auch der Abstand der einzelnen Spannungsmesswerte von den Spannungsbandgrenzen relevant. Insbesondere sind die jeweils kleinsten zur Verfügung stehenden Reserven zu den Spannungsbandgrenzen relevant. Um diese Reserven bestimmen zu können, wird vorgeschlagen, dass bei der Bestimmung ein minimaler freigegebener Spannungsmesswert und ein maximaler freigegebener Spannungsmesswert bestimmt wird. Die Spannungsmesswerte werden, wie vorgeschlagen, an unterschiedlichen Messpunkten erfasst. Die verschiedenen Messpunkte sind, wie ebenfalls vorgeschlagen, an unterschiedlichen Positionen innerhalb vorzugsweise verschiedener Mittelspannungsstrecken angeordnet. Je nach Last bzw. Einspeiseleistung in den nachgeordneten Niederspannungsnetzen ergeben sich unterschiedliche Spannungsverläufe entlang der Mittelspannungsstrecken. Je nach Messpunkt sowie je nach Leistungsfluss innerhalb der Mittelspannungsstrecken können die Spannungsmesswerte oberhalb oder unterhalb eines Mittelwertes eines Spannungsbandes liegen. Zur Bestimmung der Abstände (Reserven, Spannungsreserven) zu den Spannungsbandgrenzen sind minimale und maximale Spannungsmesswerte der freigegebenen Spannungsmesswerte notwendig.

Gemäß einem Ausführungsbeispiel wird vorgeschlagen, dass aus den freigegebenen Spannungsmesswerten die Spannungsreserve zu den Grenzen des Spannungsbandes bestimmt wird. Dabei wird bevorzugt, dass die Spannungsreserve für insbesondere den minimalen Spannungsmesswert und den maximalen Spannungsmesswert bestimmt wird. Die Spannungsreserve zum oberen Spannungsband (obere Reserve) wird vorzugsweise ausgehend von dem maximalen Spannungsmesswert bestimmt und die Spannungsreserve zum unteren Spannungsband (untere Reserve) wird vorzugsweise aus dem minimalen Spannungsmesswert bestimmt.

Ein Spannungsband in der Mittelspannungsebene kann beispielsweise entsprechend DIN EN 50160 oder auch enger sein, beispielsweise kann ein Spannungsband zwischen einer minimalen Spannung von 9.000V und einer maximalen Spannung von 11.000V liegen. Engere Spannungsgrenzen sind ebenfalls möglich, so kann beispielsweise eine untere Spannungsgrenze bei 9.500V liegen, vorzugsweise bei 9.850V. Eine obere Spannungsgrenze kann beispielsweise bei 10.500V oder auch 10.000V liegen. Je enger die Spannungsgrenzen sind, desto wahrscheinlicher ist die Notwendigkeit einer Weitbereichsregelung.

Die Ausgangssollspannung, welches die Sollspannung am Ausgang des Hochleistungs-Mittelspannungs-Transformators ist, kann anschließend basierend auf dem Spannungsmittelwert und/oder dem minimalen und/oder maximalen freigegebenen Spannungsmesswert und/oder der Spannungsreserve bestimmt werden. Hierbei ist es möglich, zunächst über verschiedene Zwischenschritte Annahmen zu treffen, um beispielsweise eine vorläufige Ausgangssollspannung zu bestimmen. Eine solche vorläufige Ausgangssollspannung kann beispielsweise auch in einer Angabe zu einer Veränderung der aktuellen Istspannung bzw. einer gewünschten Änderung der aktuellen Istspannung (Änderungsspannung) münden und basierend auf diesen Informationen zu der Änderung der Istspannung und/oder der gewünschten Änderung der Istspannung kann ausgehend aus der vorläufigen Ausgangssollspannung dann die endgültige Ausgangssollspannung berechnet werden.

Auch wird vorgeschlagen, dass zunächst überprüft wird, ob eine Verletzung des Spannungsbandes bzw. einer Spannungsbandgrenze durch einen Spannungsmesswert vorliegt. Eine Verletzung eines Spannungsbandes kann insbesondere dann vorliegen, wenn der minimale Spannungsmesswert unterhalb der unteren Spannungsbandgrenze liegt. Auch kann eine Verletzung eines Spannungsbandes vorliegen, wenn ein oberer Spannungsmesswert oberhalb der oberen Spannungsbandgrenze liegt.

Wird bei der Prüfung der Verletzung des Spannungsbandes festgestellt, dass eine der beiden Spannungsbandgrenzen verletzt ist, so kann es vorteilhaft sein, bei der nachfolgenden Prüfung die Art der Verletzung zu priorisieren. Es ist festgestellt worden, dass eine Verletzung einer oberen Spannungsbandgrenze stärkere Auswirkungen auf die Netzqualität hat, als eine Verletzung der unteren Spannungsbandgrenze. Aus diesem Grunde wird vorgeschlagen, dass die Verletzung der oberen Spannungsbandgrenze höher priorisiert ist, als die Verletzung der unteren Spannungs bandgrenze.

Es wird überprüft, ob das Spannungsband nach unten verletzt wurde. Ist dies der Fall, so kann der Wert der unteren Reserve als Änderungsspannung bestimmt werden. Auch kann überprüft werden, ob eine Spannungsbandverletzung nach oben vorliegt. Ist dies der Fall, so kann der Wert der oberen Reserve als Änderungsspannung bestimmt werden. Vorzugsweise wird zunächst die untere Reserve und anschließend die obere Reserve geprüft.

In der Regel liegt jedoch keine Verletzung des Spannungsbandes vor, da es häufig zunächst zu einer Annäherung der Spannungsmesswerte an die Spannungsbandgrenzen kommt und diese Annäherung in einem Zyklus festgestellt wird. In diesem Fall wird festgestellt, dass keine Verletzung des Spannungsbandes vorliegt, da insbesondere die obere Reserve größer 0 ist und die untere Reserve kleiner 0 ist. In diesem Fall wird zunächst eine vorläufige Änderungsspannung bestimmt. Diese vorläufige Änderungsspannung kann insbesondere aus der Sollspannung an einem Messpunkt, und beispielsweise dem Spannungsbandmittelwert und/oder dem zuvor bestimmten Mittelwert der Spannungsmesswerte bestimmt werden. Hierbei kann beispielsweise die vorläufige Änderungsspannung aus einer Differenz der Sollspannung an den Messpunkten und dem Mittelwert der Spannungsmesswerte bestimmt werden.

Ist die vorläufige Änderungsspannung bestimmt worden, kann zunächst überprüft wird, ob die vorläufige Änderungsspannung größer oder kleiner 0 istSpannungregler die Ausgangsspannung verändern soll
Die vorläufige Änderungsspannung kann gleich 0 sein oder sie kann größer bzw. kleiner 0 sein. Die vorläufige Änderungsspannung ist gleich 0, wenn der ermittelte Mittelwert der Spannungsmesswerte gleich der Sollspannung an den Messpunkten ist. Ist dies der Fall, kann eine Änderungsspannung auf 0 gesetzt werden.

Auch ist es möglich, dass die vorläufige Änderungsspannung größer 0 ist. In diesem Fall kann noch überprüft werden, ob der Wert der vorläufigen Änderungsspannung größer ist als die obere Spannungsreserve. Ist die vorläufige Änderungsspannung kleiner als die obere Spannungsreserve, kann die Änderungsspannung auf den Wert der vorläufigen Änderungsspannung gesetzt werden.

Anderenfalls, wenn die vorläufige Änderungsspannung größer als die obere Spannungsreserve ist, würde eine Änderung mit diesem Wert zu einer Verletzung des Spannungsbandes führen. Aus diesem Grunde wird in diesem Fall die Änderungsspannung auf den Wert der oberen Spannungsreserve gesetzt.

Auf der anderen Seite kann, wenn die vorläufige Änderungsspannung kleiner 0 ist überprüft werden, ob bei einer Änderung mit der vorläufigen Änderungsspannung eine Spannungsbandverletzung zur unteren Spannungsbandgrenze vorliegt. Daher wird die vorläufige Änderungsspannung mit der unteren Spannungsreserve verglichen. Ist diese kleiner als die untere Spannungsreserve, so wird die Änderungsspannung auf den Wert der vorläufigen Änderungsspannung gesetzt. Auf der anderen Seite, wenn die vorläufige Änderungsspannung größer ist, als die untere Spannungsreserve, so kann die Änderungsspannung auf den Wert der unteren Spannungsreserve gesetzt werden.

Nachdem festgestellt wurde, um welchen Betrag und in welche Richtung die Ausgangssollspannung verändert werden soll (insbesondere zunächst abhängig von der Änderungsspannung), kann gemäß einem Ausführungsbeispiel die Ausgangssollspannung abhängig von der Änderungsspannung sowie einen Spannungssollwert, insbesondere an den Messpunkten bestimmt werden. Hierbei kann jedoch zusätzlich die Regelabweichung des Spannungsreglers berücksichtigt werden.

Da die Regelabweichung des Spannungsreglers in der Regel relativ zum aktuellen Sollwert im Spannungsregler angegeben wird, wird vorgeschlagen, dass die Regelabweichung als prozentualer Anteil der Ausgangssollspannung berücksichtigt wird. Die Regelstrecke umfasst einen inneren Regelkreis des Spannungsreglers am Transformator. Dieser innere Regelkreis empfängt als Führungsgröße die Ausgangssollspannung. Abhängig vom Spannungsregler und der Hysterese im Spannungsregler erfolgt dann entweder eine Trafostufung oder nicht. Dies kann abhängig vom Abstand der Ausgangssollspannung von der nächsten Transformatorstufe sein. Auch kann der Spannungsregler derart sein, dass eine Stufung des Transformators nur erfolgt, wenn die Ausgangssollspannung innerhalb einer neuen Spannungsstufe liegt. Somit ist die Ausgangsistspannung am Transformatorausgang, insbesondere auf der Sammelschiene, nicht stets die Ausgangssollspannung, sondern in Abweichung hiervon. Darüber hinaus können Trafoverluste als auch Spannungsschwankung des übergelagerten Netzes als Störgrößen in diesen Regelkreis eingreifen.

Überlagert zu diesem inneren Regelkreis kann ein Regelkreis der Spannungsregelung des Spannungssollwertes bzw. des Sollspannung an den Messpunkten sein. Die Ausgangsistspannung wird über die Sammelschiene und die Mittelspannungsstrecken in das Mittelspannungsverteilnetz eingespeist. Dort können Störgrößen wie Lasten und Einspeisungen sowie Spannungsschwankungen und Verluste auf den Leitungen Einfluss nehmen. An den Messpunkten liegt die Istspannung an, welche durch die Spannungsmesswerte erfasst wird. Diese Istspannung der Spannungsmesswerte wird in einem übergelagerten Regelkreis rückgekoppelt auf eine Regelung der Sollspannung am Messpunkt. Als Führungsgröße wird die Sollspannung am Messpunkt zusammen mit der gemessenen Istspannung am Spannungsmesspunkt bewertet und einem Sollwertregler für die Ausgangssollspannung zugeführt. Diesem Sollwertregler wird zusätzlich die aktuelle Regelabweichung des Spannungsreglers des Transformators rückgekoppelt.

Die Berücksichtigung der aktuellen Regelabweichung des Spannungsreglers des Transformators bietet den Vorteil, dass diese durch die Anpassung der Ausgangssollspannung durch den übergelagerten Regelkreis ausgeglichen werden kann. Sollwertregler und Spannungsregler des Transformators bilden eine Art Kaskadenregelung.

Hierbei sei angemerkt, dass Sollwertregler als auch Spannungsregler des Transformators in zwei getrennten Einheiten oder auch integriert sein können. Bei bestehenden Netzen ist ein Spannungsregler am Transformator bereits vorhanden, so dass ein Sollwertregler vorgelagert werden kann. Bei Neuausrüstung oder Neuinstallation von Umspannstationen, kann der Sollwertregler zusammen mit dem Spannungsregler des Transformators in einem integrierten Bauteil realisiert sein.

Durch die Überlagerung der beiden Regelkreise ist zu beachten, dass die Regelzeit des übergelagerten Sollwertreglers nicht kürzer sein darf, als die Regelzeit des Spannungsreglers, um ein Schwingen des gesamten Regelkreises zu verhindern.

Nachfolgend wird der Gegenstand anhand einer Ausführungsbeispiele zeigenden Zeichnung näher erläutert. In der Zeichnung zeigen:
- Fig. 1: eine schematische Darstellung eines Mittelspannungsnetzes;
- Fig. 2: eine schematische Darstellung einer Kommunikationsinfrastruktur gemäß einem Ausführungsbeispiel;
- Fig. 3a-b: eine schematische Darstellung eines gegenständlichen Regelkreises;
- Fig. 4: ein Ablaufdiagramm zur Bestimmung von freigegebenen Spannungsmesswerten gemäß einem Ausführungsbeispiel;
- Fig. 5: ein Ablaufdiagramm zur Bestimmung der Ausgangssollspannung gemäß einem Ausführungsbeispiel;
- Fig. 6: ein kaskadierter Regelkreis zur Bestimmung einer Ausgangssollspannung gemäß einem Ausführungsbeispiel.

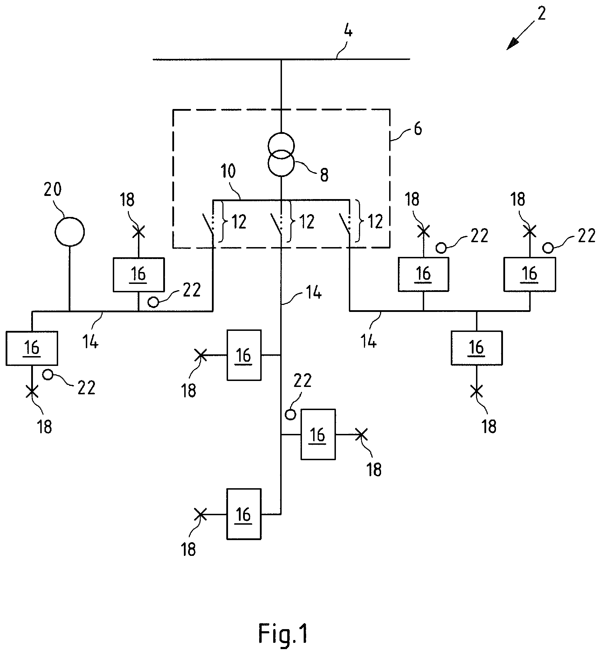

Fig. 1 zeigt ein Verteilnetz 2 in einer stark vereinfachten Darstellung. An einem Hochspannungsnetz 4 ist zumindest eine Umspannanlage 6 mit zumindest einem Hochspannungs-Mittelspannungs-Transformator 8 angeschlossen. Sekundärseitig des Transformators 8 ist die Spannung im Bereich von 10kV, primärseitig, auf der Seite des Hochspannungsnetzes 4 ist die Spannung beispielsweise in einem Bereich von 100kV.

Ausgangsseitig des Transformators 8 sind in der Umspannanlage 6 Sammelschienen 10 angeordnet, die über Abgangsfelder 12 voneinander getrennte Mittelspannungstrecken 14 mit elektrischer Leistung von dem Transformator 8 speisen bzw. bei hoher Einspeiseleistung elektrische Leistung in den Transformator 8 bzw. auf die Sammelschiene 10 einspeisen. Der Vollständigkeit halber sind an den Abgangsfeldern 12 Schalter dargestellt, die in der Regel jedoch geschlossen sind.

Die Mittelspannungstrecken 14 bzw. Teile davon sind jedoch nicht stets immer an den gleichen Transformator 8 angeschlossen, so dass in einem vermaschten Netz auf der Seite der Umspannanlage 6 nicht immer bekannt ist, welche der Mittelspannungsstrecken 14 bzw. welche Bereiche der Mittelspannungsstrecken 14 von dieser gespeist werden. Innerhalb der Mittelspannungsstrecken 14 können nicht dargestellte Schalter vorgesehen sein, um die Mittelspannungstrecken 14 einer ersten Umspannanlage 6 oder einer zweiten, davon verschiedenen Umspannanlage 6 zuzuordnen. Solche Schaltungen kommen nicht häufig vor, jedoch führen die Schaltungen zu einer Veränderung der Netztopologie. Diese Veränderung der Netztopologie macht eine Weitbereichsregelung im Bereich der Umspannanlage 6 problematisch, diese wird gegenständlich jedoch gelöst.

Bisher wird eine Weitbereichsregelung derart durchgeführt, dass ein zentrales Leitsystem Stufungsbefehle an den Transformator 8 übermittelt. Das zentrale Leitsystem ist stets in Kenntnis der gesamten Topologie des Verteilnetzes 2 und kann somit ausgehend von bekannten Messwerten den diesen Messwerten zugeordneten Transformator 8 bestimmen und entsprechende Stufungsbefehle bzw. die Ausgangssollspannungen im Transformator 8 bzw. dem Spannungssteller/Spannungsregler in dem Transformator 8 ansteuern. Diese zentrale Weitbereichsregelung ist jedoch aufwändig und teuer.

Gegenständlich wird nun vorgeschlagen, die Weitbereichsregelung dezentral innerhalb der Umspannanlagen 6 zu realisieren. Hierzu ist es notwendig, dass zunächst in der Umspannanlage 6 Spannungsmesswerte aus den Mittelspannungsstrecken 14 bekannt sind.

Entlang der Mittelspannungsstrecken 14 können Ortsnetzstationen 16 angeordnet sein, die mit einem Ortsnetztransformator ausgestattet sind und Ortsnetze 18, welche vereinfacht dargestellt sind, mit Niederspannung, insbesondere im Bereich von 0,4kV versorgen. In den Ortsnetzen 18 können sowohl Verbraucher als auch Einspeiser angeordnet sein. Insbesondere Fotovoltaikanlagen und Windkraftanlagen sowie Biomasseanlagen, KWK-Anlagen, Wasserkraftanlagen oder dergleichen mit vorzugsweise Leistungen von unterhalb 100kW sind an den Anschlusspunkten innerhalb der Ortsnetze 18 angeschlossen. Durch die Einspeisung kommt es zu starken Spannungsschwankungen nicht nur in den Ortsnetzen 18, sondern auch in den davor gelagerten Mittelspannungsstrecken 14, welche mit der gegenständlichen Weitbereichsregelung ausgeglichen werden sollen.

Neben den beschriebenen Einspeisern können auch weitere Einspeiser 20 unmittelbar oder über eine geeignete Transformatorstation (nicht dargestellt) an die Mittelspannungsstrecken 14 angeschlossen sein. Dies ist insbesondere zum Anschluss von Windparks der Fall.

Aufgrund der sich verändernden Topologie ist nicht stets sichergestellt, dass die Ortsnetze 18, wie eingezeichnet, auch einer bestimmten Umspannanlage 6 zugeordnet sind, sondern diese Zuordnung kann durch die Vermaschung des Netzes auch veränderlich sein.

Zunächst ist für eine Weitbereichsregelung eine Kenntnis der Spannungsverläufe entlang der Mittelspannungsstrecken notwendig. Hierzu können Messwertaufnehmer 22 in dem Verteilnetz 2 angeordnet sein. Wie zu erkennen ist, sind die Messwertaufnehmer 22 bevorzugt in der Nähe der Ortsnetzstationen 16, insbesondere innerhalb der Ortsnetzstationen 16 angeordnet. Es ist jedoch auch möglich, dass Messwertaufnehmen 22 entfernt von den Ortsnetzstationen 16 entlang der Mittelspannungsstrecken 14 angeordnet sind. Ferner ist zu erkennen, dass die Messwertaufnehmer 22 sowohl primärseitig unmittelbar an den Mittelspannungsstrecken 14 angeordnet sein können oder auch sekundärseitig der Ortsnetzstationen 16. Die Messwertaufnehmer 22 sind insbesondere Spannungsmesser, die vorzugsweise über Rogowski-Spulen die Spannung in den Mittelspannungsstrecken 14 an den Messpunkten aufnehmen. Sekundärseitig angeordnete Messwertaufnehmer 22 erfassen ebenfalls vorzugsweise über Rogowski-Spulen die sekundärseitige Spannung der Ortsnetzstationen 16, welche in Kenntnis der Topologie der Ortsnetzstationen 16 auf einen Spannungswert am primärseitigen Anschlusspunkt der Ortsnetzstationen 16 an die Mittelspannungsstrecke 16 umgerechnet werden kann.

Die Messwertaufnehmer 22 verfügen über Kommunikationsmittel, um die erfassten Messwerte auszusenden. Dieses Aussenden kann zyklisch in Abständen erfolgen, beispielsweise in einem sogenannten Pushbetrieb oder die Messwertaufnehmer können abgefragt werden und aufgrund der Abfrage ihre Spannungsmesswerte berichten in einem sogenannten Pullbetrieb.

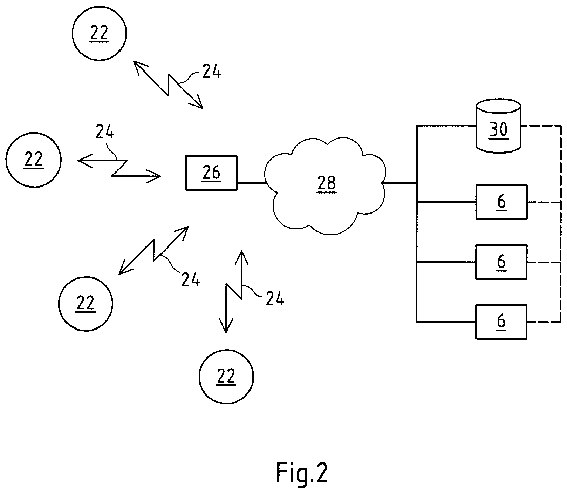

Eine Kommunikationsinfrastruktur zur Übermittlung von Spannungsmesswerten ist in der Fig. 2 dargestellt. Die Messwertaufnehmer 22 verfügen über eine Weitverkehrsnetzschnittstelle, insbesondere zur Kommunikation über eine Luftschnittstelle 24, beispielsweise über ein Mobilfunknetz, insbesondere unter Verwendung des GSM-Standards, des UMTS-Standards, des LTE-Standards oder eines hiervon abgeleiteten Standards. Es ist jedoch auch möglich, dass eine drahtgebundene Kommunikation stattfindet. Über einen Zugangspunkt 26, beispielsweise von einem Mobilfunknetzbetreiber, können die Daten anschließend über ein Weitverkehrsnetz 28, beispielsweise das Internet, beispielsweise an einen Datenkonzentrator 30 übermittelt werden. Innerhalb des Datenkonzentrators 30 kann eine Routinginformation verarbeitet werden, um die übermittelte Spannungsmesswerte von den Messwertaufnehmern 22 an die einzelnen Umspannanlagen 6 zu übertragen.

Auch ist es möglich, dass die Spannungsmesswerte von den Messwertaufnehmern 22 über den Zugangspunkt 26 und das Weitverkehrsnetz 28 unmittelbar an die Umspannanlagen 6 übertragen werden. Hierzu können in den Umspannanlagen 6 entsprechende Kommunikationsmittel vorgesehen sein. Die Kommunikation zwischen den Messwertaufnehmern 22 und dem Zugangspunkt 26 als auch die Kommunikation zwischen dem Zugangspunkt 26 und dem Datenkonzentrator 30 bzw. den Umspannanlagen 6 kann gesichert erfolgen, insbesondere über sogenannte VPN-Tunnel.

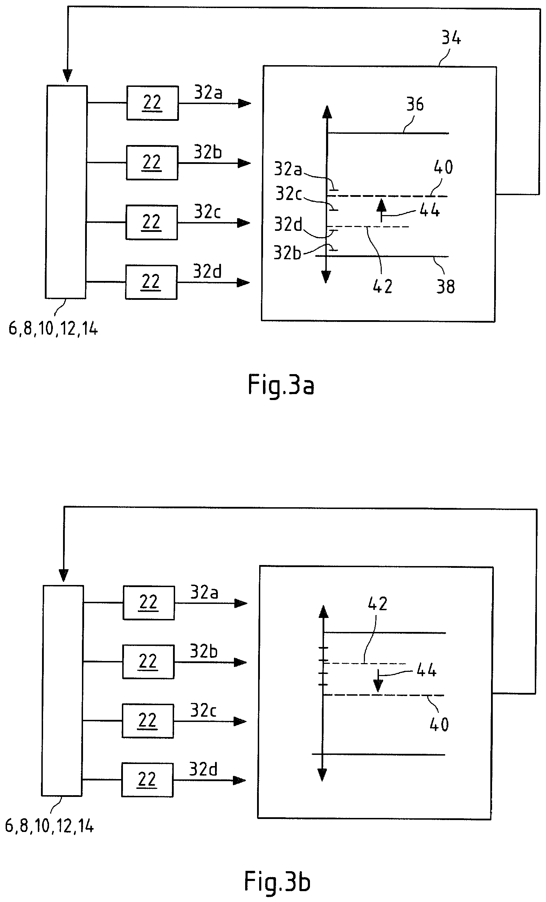

Nachdem die Messwerte in einer Umspannanlage 6 angelangt sind, können diese für die Berechnung einer Ausgangssollspannung des Transformators 8 verwendet werden. Schematisch ist dies in den Fig. 3a und 3b dargestellt, auf die nachfolgend Bezug genommen werden kann. Fig. 3a zeigt einen Zustand mit geringer Einspeisung und Fig. 3b zeigt einen Zustand mit relevanter Einspeisung.

Auf der linken Seite der Fig. 3a ist das Mittelspannungsnetz aus einer Kombination der Umspannanlage 6, des Transformators 8, der Sammelschiene 10, der Abgangsfelder 12 sowie der Mittelspannungsstrecken 14 dargestellt. An den verschiedenen Messwertaufnehmern 22 werden Spannungsmesswerte erfasst und in der beschriebenen Art und Weise an einen Regler 34, der insbesondere in der Umspannanlage 6 angeordnet ist, übertragen. In den Regler 34 werden die Spannungsmesswerte 32a-d empfangen. Ferner ist in dem Regler 34 eine obere Spannungsbandgrenze 36 und eine untere Spannungsbandgrenze 38 bekannt. Auch kann eine Sollspannung 40 an den Messpunkten bekannt sein, die insbesondere der Mittelwert zwischen der unteren Spannungsbandgrenze 38 und der oberen Spannungsbandgrenze 36 ist.

Diese Sollspannung am Messpunkt 40 ist der Idealzustand, den jedes Mittelspannungsnetz anstreben sollte, da dann die Abstände zu den Spannungsbandgrenzen 36, 38 maximiert sind. Um dies zu erreichen, setzt die Weitbereichsregelung gegenständlich ein, die dezentral in den Umspannanlagen 6 zum Einsatz kommt.

Nachdem die Spannungsmesswerte 32a-d, wie nachfolgen noch beschrieben werden wird, freigegeben wurden, können diese zur Berechnung eines Spannungsmittelwertes verwendet werden. In der Fig. 3a ist der Spannungsmittelwert 42 unterhalb der Sollspannung 40. Die Ausgangssollspannung am Transformator 8 ist in diesem Fall anzuheben, insbesondere auf einen Wert der Summe aus Sollspannung 40 und dem Wert der Änderungsspannung 44, welche sich aus der Differenz der Sollspannung 40 und des Spannungsmittelwerts 42 ergibt. Diese Ausgangssollspannung wird dann an den Spannungssteller innerhalb des Transformators 8 rückgekoppelt, so dass die Spannungsmesswerte 32 im Mittel angehoben werden, um den Mittelwert 42 in Richtung der Sollspannung 40 anzuheben.

Der Regelkreis und das Verfahren zur Bestimmung der Änderungsspannung 44 als auch der Ausgangssollspannung werden nachfolgend noch beschrieben.

Fig. 3b zeigt dieselbe Topologie wie Fig. 3a. Der einzige Unterschied der Fig. 3b und der Fig. 3a ist, dass aufgrund erhöhter Spannungsmesswerte 32a, welche zuvor freigegeben wurden, der Spannungsmittelwert 42 über der Sollspannung 40 liegt. Dies führt dazu, dass die Ausgangssollspannung am Transformator um einen Betrag einer Änderungsspannung 44 reduziert werden sollte. Insbesondere ist eine Ausgangsspannung gewünscht, die sich aus einer Differenz der Sollspannung 40 und der Änderungsspannung 44 ergibt. Die Ausgangssollspannung wird ebenfalls an den Spannungssteller in dem Transformator 8 zurückgekoppelt.

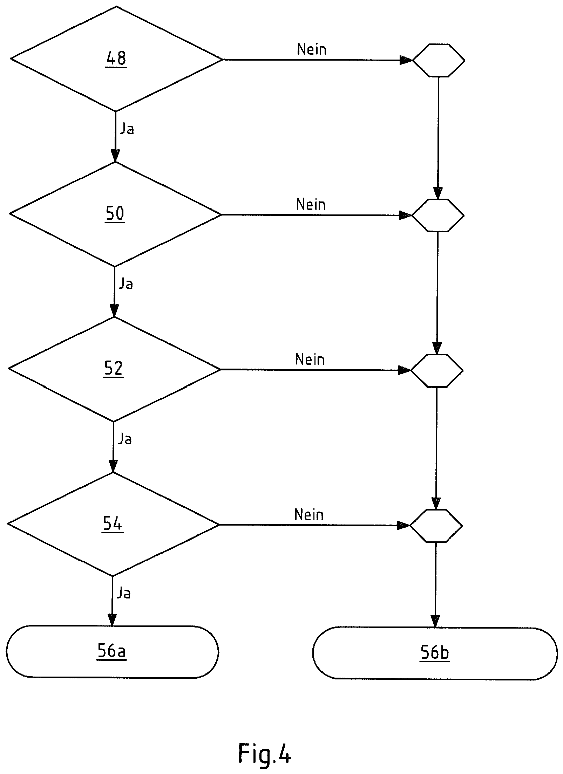

Wie bereits erwähnt, erfolgt die Berechnung der Ausgangssollspannung, welche schematisch in den Fig. 3a und 3b beschrieben wurde, gegenständlich innerhalb der Umspannanlage 6, so dass keine zentrale Leittechnik notwendig ist. Um dies zu erreichen, ist es notwendig, die Topologie des Mittelspannungsnetzes in der Umspannanlage 6 zu berücksichtigen. Hierzu ist es notwendig, zunächst festzustellen, welche Messwertaufnehmer 22 an die Umspannanlage 6 bzw. den Transformator 8 angeschlossen sind und insbesondere welche Spannungsmesswerte 32 für die Berechnung der Ausgangssollspannung verwendet werden. Dies wird gemäß einem Verfahren nach Fig. 4 durchgeführt.

Zunächst wird überwacht, ob empfangene Messwerte innerhalb eines Überwachungszykluses, beispielsweise 5 Minuten, 10 Minuten, 15 Minuten oder dergleichen, bzw. über eine bestimmte Anzahl an Messzyklen eine minimale Schwankungsbandbreite überschreiten. Es ist erkannt worden, dass die Spannung an den Messwertaufnehmern 22 im Regelbetrieb mehr als eine minimale Schwankungsbreite schwankt. Sind die Messwerte innerhalb einer minimalen Schwankungsbreite, kann gegebenenfalls ein Fehler des Messwertaufnehmers oder der Kommunikationsstrecke oder dergleichen vorliegen, so dass die entsprechenden Messwerte 32 des Messwertaufnehmers 22 für die weitere Betrachtung nicht relevant sind. Somit wird für jeden Messwertaufnehmer 22, von dem Messwerte 32 empfangen werden, die Schwankungsbreite überwacht und nur solche Messwertaufnehmer 22, die entsprechende Messwerte 32 mit einer entsprechenden Spannungsbreite liefern, werden für die nachfolgende Betrachtung verwendet. Alle anderen Messwerte 32 werden für die nachfolgende Betrachtung verworfen. Im nächsten Betrachtungszeitraum werden dann wieder alle Messwertaufnehmer 22 in die Betrachtung eingeschlossen und der Ablauf gemäß Fig. 4 wird vollständig durchlaufen.

Somit wird im Schritt 48 die Messwertveränderung innerhalb eines Betrachtungszeitraums überprüft. Dabei ist es möglich, dass zunächst eine Anzahl an Messzyklen, beispielsweise drei, fünf oder zehn Messzyklen abgewartet wird und in jedem Messzyklus ein Spannungsmesswert erfasst wird. Dann wird in dem Schritt 48 überprüft, ob über die Anzahl an Messzyklen die Schwankungsbreite der Spannungsmesswerte 32 größer als ein Mindestwert war oder nicht. Die Messwertveränderung über die Anzahl der Messzyklen kann in einem gleitenden Fenster überwacht werden, so dass jeweils für eine Berechnung eine Ausgangssollspannung, beispielsweise die letzten drei, fünf oder zehn Messzyklen Verwendung finden und im nächsten Zyklus die ältesten Messwerte verworfen werden und wiederum nur die jüngsten Messwerte verwendet werden. Dieser Ablauf, insbesondere über das gleitende Fenster, kann über die gesamten Schritte 48-56 gemäß der Fig. 4 durchgeführt werden.

Ist festgestellt worden, dass von einem Messwertaufnehmer die Spannungsmesswerte 32 dem Kriterium gemäß Schritt 48 genügen, wird in Schritt 50 eine Reaktion des Spannungsmesswertes 32 eines Messwertsaufnehmers 22 auf eine Transformatorstufung überwacht. Beispielsweise kann eine Spannungsreaktion nach oben als auch nach unten größer 50V, vorzugsweise größer 70V, insbesondere größer 90V sein. Ist eine solche Reaktion auf eine Spannungsstufung im Transformator 8 im Schritt 50 für einen Messwert 32 festgestellt worden, wird dieser in Schritt 52 überführt. Anderenfalls wird der Messwert in Schritt 56 verworfen. Die Reaktion auf die Trafostufung wird für alle zuvor freigegebenen Spannungsmesswerte überwacht.

In Schritt 52 wird überprüft, ob die zuvor freigegebenen Spannungsmesswerte kleiner als eine obere Plausibilitätsgrenze sind. Ist dies nicht der Fall, werden die Spannungsmesswerte in Schritt 56b verworfen. Anschließend wird in Schritt 54 noch überprüft, ob die Spannungsmesswerte 32 über einer unteren Plausibilitätsgrenze liegen. Ist dies nicht der Fall, werden die Messwerte ebenfalls in Schritt 56b verworfen.

Alle anderen, zuvor freigegebenen Messwerte, die die Schritte 58-54 durchlaufen haben, werden in Schritt 56a für die weitere Berechnung freigegeben. Anschließend erfolgt die Berechnung der Ausgangssollspannung und ein neuer Zyklus wird ausgehend von Schritt 48 durchlaufen.

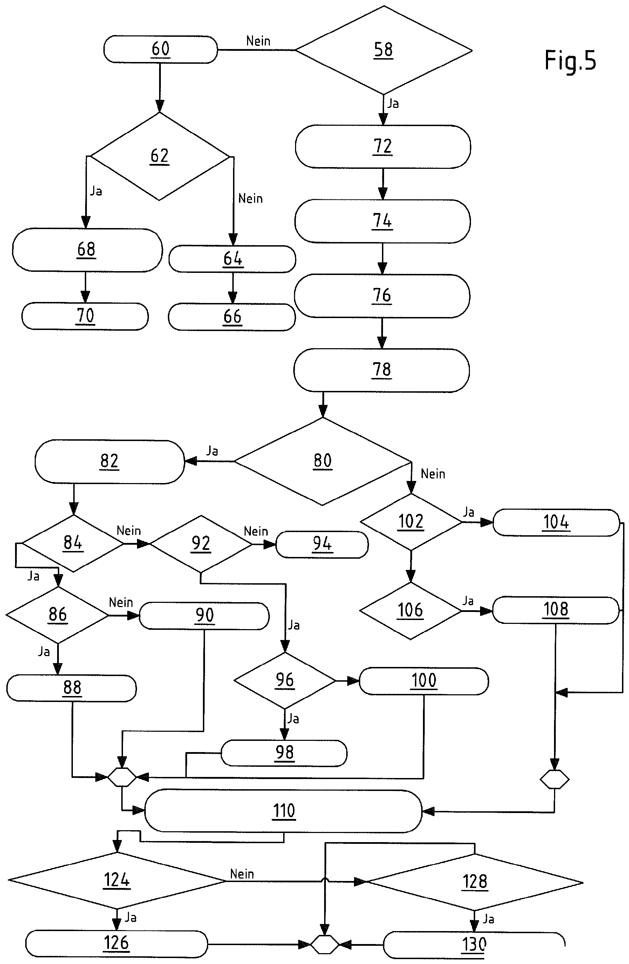

Fig. 5 zeigt den Ablauf des Verfahrens zur Bestimmung der Ausgangssollspannung. Am Ende eines jedes Zyklus wird in Schritt 58 überprüft, ob in diesem Zyklus in Schritt 56a eine Mindestanzahl an Messwerten freigegeben wurde. Diese Mindestanzahl kann beispielsweise zwei sein. Ist dies nicht der Fall, wird in Schritt 60 ein Fehlerzähler hochgezählt. In Schritt 62 wird der Fehlerzähler überprüft. Ist die Anzahl der Fehler kleiner als eine Fehlergrenze, so wird die Änderungsspannung zu 0 gesetzt (64) und ein Warnsignal (66) ausgegeben. Ist der Grenzwert an Fehlern erreicht, so wird die Ausgangssollspannung 46 auf die Sollspannung am Messpunkt 40 gesetzt (68) und ein Fehlersignal ausgegeben (70).

Anderenfalls, wenn in Schritt 58 ausreichend Messwerte festgestellt wurden, wird zunächst der Fehlerzähler auf 0 zurückgesetzt und in Schritt 72 der Spannungsmittelwert 42 berechnet. Wie bereits erläutert, kann dies gewichtet erfolgen.

In Schritt 74 wird der maximale Spannungsmesswert 32 aus den freigegebenen Spannungsmesswerten ermittelt und in Schritt 76 wird der minimale Spannungsmesswert aus den freigegebenen Spannungsmesswerten 32 ermittelt.

Abschließend wird in Schritt 78 die jeweilige Spannungsreserve zu der oberen Spannungsbandgrenze 36 und der unteren Spannungsbandgrenze 38 bestimmt. Die obere Reserve ergibt sich aus dem Maximalwert der Spannungsmessewerte 32 und der oberen Spannungsbandgrenze 36 und die untere Reserve ergibt sich aus dem Minimalwert der Spannungsmessewerte 32 und der unteren Spannungsbandgrenze 38.

Ist der Spannungsmittelwert 42 als auch die obere und untere Reserve bestimmt worden, wird in Schritt 80 die Reserve überprüft. Hierbei wird überprüft, ob die obere Reserve größer 0 ist und ob die untere Reserve kleiner 0 ist. Ist dies der Fall, wird in Schritt 82 eine vorläufige Änderungsspannung aus der Differenz zwischen der Sollspannung 40 und dem Spannungsmittelwert 42 berechnet.

Dann wird in Schritt 84 überprüft, ob die vorläufige Änderungsspannung größer 0 ist. Ist dies der Fall, wird in Schritt 86 überprüft, ob die vorläufige Änderungsspannung größer als die obere Spannungsreserve ist. Ist dies der Fall, so wird die Änderungsspannung auf den Wert der oberen Spannungsreserve in Schritt 88 gesetzt. Anderenfalls wird in Schritt 90 die Änderungsspannung auf den Wert der vorläufigen Änderungsspannung gesetzt.

Wird in Schritt 84 festgestellt, dass die vorläufige Änderungsspannung kleiner oder gleich 0 ist, wird zunächst in Schritt 92 überprüft, ob die vorläufige

Änderungsspannung kleiner 0 ist. Ist dies nicht der Fall, so ist die vorläufige Änderungsspannung gleich 0 und somit wird in Schritt 94 die Änderungsspannung zu 0 gesetzt.

Ist die vorläufige Änderungsspannung kleiner 0, wird in Schritt 96 noch überprüft, ob die vorläufige Änderungsspannung kleiner als die untere Reserve ist. Ist dies der Fall, so wird in Schritt 98 die Änderungsspannung auf den Wert der unteren Reserve gesetzt, anderenfalls wird die Änderungsspannung in Schritt 100 auf den Wert der vorläufigen Änderungsspannung gesetzt.

In Schritt 80 wurde überprüft, ob die Spannungsbandgrenzen eingehalten wurden. Ist dies nicht der Fall, so wird in Schritt 102 geprüft, ob die untere Reserve größer 0 ist und gegebenenfalls in Schritt 104 der Wert der Änderungsspannung auf den Wert der unteren Reserve gesetzt. Falls nicht, wird in Schritt 106 die obere Reserve überprüft. Falls diese kleiner 0 ist, wird die Änderungsspannung in 108 auf den Wert der oberen Reserve gesetzt.

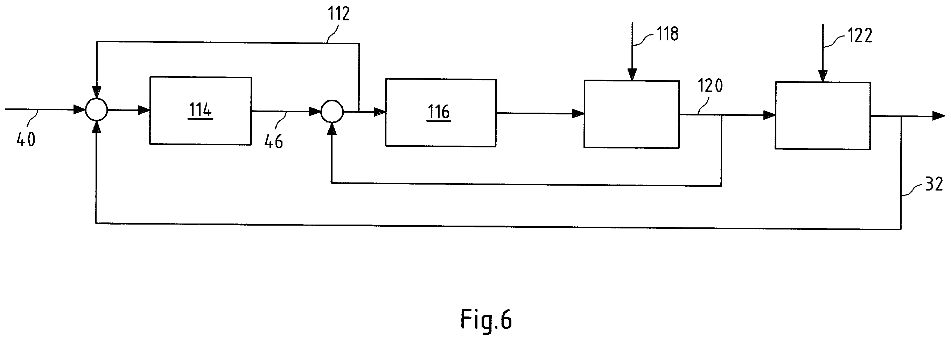

Ausgehend von den beiden Entscheidungsbäumen, ausgehend von Schritt 80, liegt dann in Schritt 110 ein Wert der Änderungsspannung vor. In Schritt 110 erfolgt dann eine Regelung der Ausgangssollspannung 46. Diese Regelung ist in Fig. 6 dargestellt.

Eingang für diesen Regelkreis ist die Sollspannung am Messpunkt 40. Über einen Sollwertregler wird ausgehend von dieser Sollspannung 40 ein Wert der Ausgangssollspannung 46 bestimmt. Der Wert der Ausgangssollspannung 46 berechnet sich dabei aus der Summe der Sollspannung 40 und der Änderungsspannung 46, die sich wie oben beschrieben aus den rückgekoppelten Spannungsmesswerten 32 ergibt, sowie einer Rückkoppelung der Regelabweichung 112. Die Änderungsspannung ergibt sich dabei vorzugsweise zu der Summe der Sollspannung 40 und der Änderungsspannung 44 dividiert durch eins plus Regelabweichung 112.

Der Sollwertregler 114 führt vorzugsweise die Berechnung gemäß der Schritte 48 bis 110 durch. Die Ausgangssollspannung wird dem Spannungsregler 116 des Transformators zugeführt, welcher hieraus einen Stufungsbefehl für den Transformator 8 berechnet. Ausgehend von diesem Stufungsbefehl erfolgt eine Stufung des Transformators 8 und entlang der Regelstrecke des Transformators 8 führen Störgrößen 118, wie Trafoverluste und Spannungsschwankungen des übergelagerten Netzes 4, zu einer Ausgangsistspannung 120 am Transformator 8. Diese Ausgangsistspannung wird in dem inneren Regelkreis an den Sollwertregler 116 zurückgekoppelt.

Entlang der Mittelspannungsstrecken 14 führen weitere Störgrößen 122, wie Netzverluste, Einspeisungen und dergleichen dazu, dass die Spannungsmesswerte 32 von der Sollspannung 40 am Messpunkt abweichen und diese tatsächlichen Istspannungen werden in dem äußeren Regelkreis auf den Sollwertregler 14 zurückgekoppelt.

In Schritt 124 wird eine Verletzung der Sollspannung an der Sammelschiene überprüft. Ist die Änderungssollspannung kleiner als der minimale Sollwert der Spannung an der Sammelschiene, so wird die Ausgangssollspannung in Schritt 126 auf den minimalen Wert der Spannung an der Sammelschiene gesetzt. Anderenfalls wird in Schritt 128 noch überprüft, ob die Änderungssollspannung größer ist, als die maximale Sollspannung an der Sammelschiene. Ist dies der Fall, so wird in Schritt 130 die Ausgangssollspannung auf den maximalen Spannungswert an der Sammelschiene gesetzt. Anderenfalls wird die Änderungssollspannung nicht mehr verändert und an den Spannungsregler 116 übergeben.

### Bezugszeichenliste

- 2: Verteilnetz
- 4: Hochspannungsnetz
- 6: Umspannanlage
- 8: Hochspannungs-Mittelspannungs-Transformator
- 10: Sammelschiene
- 12: Ausgangsfelder
- 14: Mittelspannungsstrecken
- 16: Ortsnetzstation
- 18: Ortsnetz
- 20: Einspeiser
- 22: Messwertaufnehmer
- 24: Luftschnittstelle
- 26: Zugangspunkt
- 28: Weitverkehrsnetz
- 30: Datenkonzentrator
- 32: Spannungsmesswerte
- 34: Regler
- 36: obere Spannungsbandgrenze
- 38: untere Spanungsbandgrenze
- 40: Sollspannungsmesspunkt
- 42: Spannungsmittelwert
- 44: Änderungsspannung
- 46: Ausgangssollspannung
- 48: Überprüfen der Messwertveränderung
- 50: Reaktion auf Trafostufung
- 52, 54: Plausibilitätsprüfung
- 56a: Freigabe
- 56b: Verwerfen
- 58: Anzahl Messwerte
- 60: Fehlerzähler
- 62: Prüfen Fehlerzähler
- 64: Änderung gleich 0
- 66: Warnsignal
- 68: Bestimmen Ausgangssollspannung
- 70: Fehlersignal
- 72: Mittelwert
- 74: Minimalwert
- 76: Maximalwert
- 78: Reserve
- 80: Prüfen Reserve
- 82: vorläufige Änderungsspannung
- 84: Prüfen vorläufige Änderungsspannung
- 86: Prüfen Reserve
- 88: Änderungsspannung gleich obere Reserve
- 90: Änderungsspannung gleich vorläufige Änderungsspannung
- 92: Prüfen vorläufige Änderungsspannung
- 94: Änderungsspannung gleich 0
- 96: Prüfen Reserve
- 98: Änderungsspannung gleich untere Reserve
- 100: Änderungsspannung gleich vorläufige Änderungsspannung
- 102: Prüfen untere Reserve
- 104: Änderungsspannung ist untere Reserve
- 106: Prüfen obere Reserve
- 108: Änderungsspannung gleich obere Reserve
- 114: Sollwertregler
- 116: Spannungsregler
- 118: Störgröße
- 120: Ausgangsistspannung
- 122: Störgröße
- 124: Prüfen Sammelschiene
- 126: Ausgangssollspannung gleich minimale Spannung an der Sammelschiene
- 128: Prüfen Sammelschiene
- 130: Ausgangsspannung ist maximale Spannung an der Sammelschiene

## Patentansprüche

1. Verfahren zur dezentralen Weitbereichsregelung umfassend:
- Empfangen von Spannungsmesswerten (32) aus Mittelspannungsstrecken (14), die an zumindest zwei voneinander verschiedenen Abgangsfeldern einer Umspannanlage (6) angeschlossen sind,
- Verändern einer Ausgangsspannung eines mit den Abgangsfeldern verbundenen Transformators der Umspannanlage (6) und Überwachen einer Abhängigkeit der empfangenen Spannungsmesswerte (32) von dieser Veränderung, so dass für eine nachfolgende Auswertung solche Spannungsmesswerte (32) freigegeben werden, die eine Abhängigkeit von der Veränderung haben,
- Auswerten der empfangenen, freigegebenen Spannungsmesswerte (32) in der Umspannanlage (6),
- Bestimmen einer Ausgangssollspannung (46) für den Transformator in der Umspannanlage (6) abhängig von der Auswertung.

2. Verfahren nach Anspruch 1,
**dadurch gekennzeichnet,**
- **dass** die Veränderung der empfangenen Spannungsmesswerte (32) über ein Zeitintervall überwacht wird und dass für die nachfolgende Auswertung solche Spannungsmesswerte (32) freigegeben werden, deren Schwankungsbreite in dem Zeitintervall über einem Grenzwert liegt.

3. Verfahren nach einem der vorangehenden Ansprüche,
**dadurch gekennzeichnet,**
- **dass** für die nachfolgende Auswertung solche Spannungsmesswerte (32) freigegeben werden, die dei kleiner als ein oberer Grenzwert und/oder größer als ein unterer Grenzwert sind.

4. Verfahren nach einem der vorangehenden Ansprüche,
**dadurch gekennzeichnet,**
- **dass** die Auswertung mit mindestens zwei zuvor für die Auswertung freigegeben Spannungsmesswerten (32) durchgeführt wird.

5. Verfahren nach einem der vorangehenden Ansprüche,
**dadurch gekennzeichnet,**
- **dass** bei der Bestimmung ein Spannungsmittelwert (42) der freigegebenen Spannungsmesswerte (32) bestimmt wird, insbesondere dass die Spannungsmesswerte (32) zunächst abhängig von Wichtungskriterien gewichtet werden und anschließend der Spannungsmittelwert (42) aus den gewichteten Spannungsmesswerten (32) bestimmt wird.

6. Verfahren nach einem der vorangehenden Ansprüche,
**dadurch gekennzeichnet,**
- **dass** bei der Bestimmung ein minimaler freigegebener Spannungsmesswert und ein maximaler freigegebener Spannungsmesswert bestimmt wird.

7. Verfahren nach einem der vorangehenden Ansprüche,
**dadurch gekennzeichnet,**
- **dass** aus den freigegebenen Spannungsmesswerten (32) eine Spannungsreserve (78) zu den Grenzen eines Spannungsbandes bestimmt wird.

8. Verfahren nach einem der Ansprüche 5 bis 7,
**dadurch gekennzeichnet,**
- **dass** die Ausgangssollspannung (46) oder eine vorläufige Ausgangssollspannung (46) abhängig von zumindest dem Spannungsmittelwert (42) und/oder dem minimalen und/oder maximalen freigegebenen Spannungsmesswert und/oder der Spannungsreserve (78) bestimmt wird.

9. Verfahren nach Anspruch 7,
**dadurch gekennzeichnet,**
- **dass** bei einer Verletzung des Spannungsbandes durch einen Spannungsmesswert geprüft wird, ob der minimale Spannungsmesswert unterhalb einer unteren Grenze des Spannungsbandes liegt und gegebenenfalls der Abstand des minimalen Spannungsmesswerts von der unteren Grenze des Spannungsbandes als Änderungsspannung ausgegeben wird und/oder ob der maximale Spannungsmesswert oberhalb einer oberen Grenze des Spannungsbandes liegt und gegebenenfalls der Abstand des maximalen Spannungsmesswerts von der oberen Grenze des Spannungsbandes als Änderungsspannung ausgegeben wird, insbesondere dass zunächst der minimale Spannungsmesswert geprüft wird und anschließend der maximale Spannungsmesswert.

10. Verfahren nach Anspruch 5 und Anspruch 7 oder 9, **dadurch gekennzeichnet,**
- **dass** bei keiner Verletzung des Spannungsbandes durch einen Spannungsmesswert eine vorläufige Ausgangssollspannung (46) aus einer Differenz einer Sollspannung und dem bestimmten Spannungsmittelwert (42) bestimmt wird.

11. Verfahren nach Anspruch 9 und 10, **dadurch gekennzeichnet,**
- **dass** der Wert der vorläufigen Ausgangssollspannung geprüft wird und dass abhängig von dem Wert der vorläufigen Ausgangssollspannung der Wert der Änderungsspannung auf den Wert der vorläufigen Ausgangssollspannung oder auf den Wert des Abstands eines der Spannungsmesswerte (32) von einer der Grenzen des Spannungsbandes bestimmt wird.

12. Verfahren nach Anspruch 9, **dadurch gekennzeichnet,**
- **dass** die Ausgangssollspannung abhängig von der Änderungsspannung sowie einem Spannungssollwert bestimmt wird.

13. Verfahren nach einem der vorangehenden Ansprüche,
**dadurch gekennzeichnet,**
- **dass** die Ausgangssollspannung abhängig von einer Regelabweichung an einem Spannungssteller des Transformators bestimmt wird.

14. System eingerichtet zur dezentralen Weitbereichsregelung umfassend:
- Empfangsmittel eingerichtet zum Empfangen von Spannungsmesswerten (32) aus Mittelspannungsstrecken (14), die an zumindest zwei voneinander verschiedenen Abgangsfeldern einer Umspannanlage (6) angeschlossen sind, wobei die Empfangsmittel an der Umspannanlage (6) angeordnet sind,
- Auswertemittel, eingerichtet zum Verändern einer Ausgangsspannung eines mit den Abgangsfeldern verbundenen Transformators und zum Überwachen einer Abhängigkeit der empfangenen Spannungsmesswerte (32) von dieser Veränderung, so dass für die nachfolgende Auswertung solche Spannungsmesswerte (32) freigegeben werden, die eine Abhängigkeit von der Veränderung haben,
- wobei die Auswertemittel weiterhin zum Auswerten der empfangenen, freigegebenen Spannungsmesswerte (32) in der Umspannanlage (6) eingerichtet sind, wobei die Auswertemittel an der Umspannanlage (6) angeordnet sind,
- Rechenmittel eingerichtet zum Bestimmen einer Ausgangssollspannung abhängig von der Auswertung für den Transformator in der Umspannanlage (6), wobei die Rechenmittel an der Umspannanlage (6) angeordnet sind.

## Claims

1. Method for decentralised wide-range control:
- receiving voltage measured values (32) from medium-voltage lines (14) which are connected to at least two output fields of a transformer substation (6) which are different from one another,
- changing an output voltage of a transformer of the transformer substation (6) connected to the output fields and monitoring a dependence of the received voltage measured values (32) on this change, so that those voltage measured values (32) which have a dependence on the change are enabled for a subsequent evaluation,
- evaluating the received, enabled voltage measured values (32) in the substation (6),
- determining an output nominal voltage (46) for the transformer in the transformer substation (6) as a function of the evaluation.

2. Method according to claim 1,
**characterized in that**
- the change in the received voltage measured values (32) is monitored over a time interval, and **in that** those voltage measured values (32) whose fluctuation range in the time interval lies above a limit value are enabled for the subsequent evaluation.

3. Method according to one of the preceding claims,
**characterized in that**
- voltage measured values (32) which are smaller than an upper limit value and/or larger than a lower limit value are enabled for the subsequent evaluation.

4. Method according to one of the preceding claims,
**characterized in that**
- the evaluation is carried out with at least two voltage measured values (32) which have previously been enabled for evaluation.

5. Method according to one of the preceding claims,
**characterized in that**
- a mean voltage value (42) of the enabled voltage measured values (32) is determined during the determination, in particular **in that** the voltage measured values (32) are first weighted as a function of weighting criteria and then the mean voltage value (42) is determined from the weighted voltage measured values (32).

6. Method according to one of the preceding claims,
**characterized in that**
- a minimum of an enabled voltage measured value and a maximum of an enabled voltage measured value are determined during the determination.

7. Method according to one of the preceding claims,
**characterized in that**
- a voltage reserve (78) to the limits of a voltage band is determined from the enabled voltage measured values (32).

8. Method in accordance with one of claims 5 to 7,
**characterized in that**
- the output nominal voltage (46) or a provisional output nominal voltage (46) is determined as a function of at least the mean voltage value (42) and/or the minimum and/or maximum of the enabled voltage measured value and/or the voltage reserve (78).

9. Method according to claim 7,
**characterized in that**
- if the voltage band is violated by a voltage measured value, it is checked whether the minimum of the voltage measured value is below a lower limit of the voltage band and, if appropriate, the distance of the minimum of the voltage measured value from the lower limit of the voltage band is output as a change voltage and/or whether the maximum of the voltage measured value is above an upper limit of the voltage band and, if appropriate, the distance of the maximum of the voltage measured value from the upper limit of the voltage band is output as a change voltage, in particular **in that** the minimum of the voltage measured value is first checked and then the maximum of the voltage measured value is checked.

10. Method according to claim 5 and claim 7 or 9,
**characterized in that**
- if the voltage band is not violated by a voltage measured value, a provisional output nominal voltage (46) is determined from a difference between a nominal voltage and the determined mean voltage value (42).

11. Method according to claims 9 and 10,
**characterized in that**
- the value of the provisional output nominal voltage is checked and **in that**, as a function of the value of the provisional output nominal voltage, the value of the change voltage is set to the value of the provisional output nominal voltage or to the value of the distance of one of the voltage measured values (32) from one of the limits of the voltage band.

12. Method according to claim 9,
**characterized in that**
- the output nominal voltage is determined as a function of the change voltage and a voltage nominal value.

13. Method according to one of the preceding claims,
**characterized in that**
- the output nominal voltage is determined as a function of a control deviation at a voltage regulator of the transformer.

14. System arranged for decentralised wide range control comprising:
- receiving means arranged for receiving voltage measured values (32) from medium-voltage lines (14) which are connected to at least two output fields of a transformer substation (6) which are different from one another, the receiving means being arranged at the transformer substation (6),
- evaluation means, arranged for changing an output voltage of a transformer connected to the output fields and for monitoring a dependence of the received voltage measured values (32) on this change, so that those voltage measured values (32) which have a dependence on the change are enabled for the subsequent evaluation,
- wherein the evaluation means are further arranged for evaluating the received, enabled voltage measured values (32) in the transformer substation (6), wherein the evaluation means are arranged at the transformer substation (6),
- calculating means arranged for determining a nominal output voltage for the transformer in the transformer substation (6) as a function of the evaluation, the calculating means being arranged at the transformer substation (6).

## Revendications

1. Procédé de régulation décentralisée à longue portée, ledit procédé consistant :
- à recevoir des valeurs de mesure de tension (32) provenant de trajets de moyenne tension (14) qui sont connectés à au moins deux champs de départ d'un poste de transformation (6), lesdits champs de départ étant différents l'un de l'autre,
- à modifier une tension de sortie d'un transformateur du poste de transformation (6), ledit transformateur étant raccordé aux champs de départ, et à surveiller une fonction de dépendance des valeurs de mesure de tension reçues (32), par rapport à la modification effectuée, de sorte que de telles valeurs de mesure de tension (32) sont validées pour une analyse suivante, lesquelles valeurs de mesure de tension ont une fonction de dépendance par rapport à la modification,
- à analyser les valeurs de mesure de tension (32) validées et reçues dans le poste de transformation (6),
- à déterminer, en fonction de l'analyse, une tension théorique de sortie (46) pour un transformateur placé dans le poste de transformation (6).

2. Procédé selon la revendication 1,
**caractérisé**
**en ce que** la modification des valeurs de mesure de tension reçues (32) est surveillée pendant un intervalle de temps, et **en ce que** de telles valeurs de mesure de tension (32) sont validées pour l'analyse suivante, valeurs de mesure de tension dont la largeur de fluctuation se situe, au cours de l'intervalle de temps, au-dessus d'une valeur limite.

3. Procédé selon l'une des revendications précédentes, **caractérisé**
**en ce que** de telles valeurs de mesure de tension (32) sont validées pour l'analyse suivante, valeurs de mesure de tension qui sont inférieures à une valeur limite supérieure et/ou supérieures à une valeur limite inférieure.

4. Procédé selon l'une quelconque des revendications précédentes,
**caractérisé**
**en ce que** l'analyse est effectuée avec au moins deux valeurs de mesure de tension (32) validées auparavant pour l'analyse.

5. Procédé selon l'une quelconque des revendications précédentes,
**caractérisé**
**en ce que**, lors de la détermination, est déterminée une valeur moyenne de tension (42) des valeurs de mesure de tension validées (32), en particulier **en ce que** les valeurs de mesure de tension (32) sont pondérées d'abord en fonction de critères de pondération et, ensuite, la valeur moyenne de tension (42) est déterminée à partir des valeurs de mesure de tension pondérées (32).

6. Procédé selon l'une quelconque des revendications précédentes,
**caractérisé**
**en ce que**, lors de la détermination, sont déterminées une valeur de mesure de tension validée minimale et une valeur de mesure de tension validée maximale.

7. Procédé selon l'une quelconque des revendications précédentes,
**caractérisé**
**en ce qu'**une réserve de tension (78) est déterminée à partir des valeurs de mesure de tension validées (32), ladite réserve de tension allant jusqu'aux limites d'une bande de tension.

8. Procédé selon l'une quelconque des revendications 5 à 7,
**caractérisé**
**en ce que** la tension théorique de sortie (46) ou bien une tension théorique de sortie (46) provisoire est déterminée en fonction au moins de la valeur moyenne de tension (42) et/ou en fonction de la valeur de mesure de tension validée minimale et/ou maximale et/ou en fonction de la réserve de tension (78).

9. Procédé selon la revendication 7,
**caractérisé**
**en ce que**, dans le cas d'un dépassement de la bande de tension par une valeur de mesure de tension, on vérifie si la valeur de mesure de tension minimale se situe au-dessous d'une limite inférieure de la bande de tension et, le cas échéant, la distance de la valeur de mesure de tension minimale, par rapport à la limite inférieure de la bande de tension, est fournie comme tension de modification et/ou on vérifie si la valeur de mesure de tension maximale se situe au-dessus d'une limite supérieure de la bande de tension et, le cas échéant, la distance de la valeur de mesure de tension maximale, par rapport à la limite supérieure de la bande de tension, est fournie comme tension de modification, en particulier **en ce que** la valeur de mesure de tension minimale est vérifiée en premier lieu et, ensuite, est vérifiée la valeur de mesure de tension maximale.

10. Procédé selon la revendication 5 et selon la revendication 7 ou 9,
**caractérisé**
**en ce que** dans le cas d'un dépassement de la bande de tension par une valeur de mesure de tension, une tension théorique de sortie (46) provisoire est déterminée à partir d'une différence existant entre une tension théorique et la valeur moyenne de tension déterminée (42).

11. Procédé selon les revendications 9 et 10,
**caractérisé**
**en ce que** la valeur de la tension théorique de sortie provisoire est vérifiée, et **en ce que**, en fonction de la valeur de la tension théorique de sortie provisoire, la valeur de la tension de modification est déterminée d'après la valeur de la tension théorique de sortie provisoire ou bien d'après la valeur de la distance de l'une des valeurs de mesure de tension (32), par rapport à l'une des limites de la bande de tension.

12. Procédé selon la revendication 9,
**caractérisé**
**en ce que** la tension théorique de sortie est déterminée en fonction de la tension de modification ainsi qu'en fonction d'une valeur théorique de tension.

13. Procédé selon l'une quelconque des revendications précédentes,
**caractérisé**
**en ce que** la tension théorique de sortie est déterminée sur un élément de réglage de la tension du transformateur, en fonction d'un écart de réglage.

14. Système conçu pour la régulation décentralisée à longue portée, ledit système comprenant :
- des moyens de réception conçus pour la réception de valeurs de mesure de tension (32) provenant de trajets de moyenne tension (14) qui sont connectés à au moins deux champs de départ d'un poste de transformation (6), lesdits champs de départ étant différents l'un de l'autre, où les moyens de réception sont disposés sur le poste de transformation (6),
- des moyens d'analyse conçus pour la modification d'une tension de sortie d'un transformateur raccordé aux champs de départ, et conçus pour la surveillance d'une fonction de dépendance des valeurs de mesure de tension reçues (32), par rapport à cette modification, de sorte que de telles valeurs de mesure de tension (32) sont validées pour l'analyse suivante, lesquelles valeurs de mesure de tension ont une fonction de dépendance par rapport à la modification,
- où les moyens d'analyse sont conçus en outre pour l'analyse des valeurs de mesure de tension (32) validées et reçues dans le poste de transformation (6), où les moyens d'analyse sont disposés sur le poste de transformation (6),
- des moyens de calcul conçus pour la détermination, en fonction de l'analyse, d'une tension théorique de sortie pour le transformateur placé dans le poste de transformation (6), où les moyens de calcul sont disposés sur le poste de transformation (6).
